# EUROPEAN PATENT APPLICATION

(11) **EP 4 700 260 A1**
(43) Date of publication of application: **25.02.2026**
(21) Application number: 24792361.8
(22) Date of filing: 26.02.2024
(51) Int. Cl.: F16K 31/04

(54) **ELECTRIC VALVE**

(30) Priority: 17.04.2023 JP 2023066944
(71) Applicant: Fujikoki Corporation, Tokyo 158-0082 (JP)
(72) Inventor: IKEDA Yutaka, Tokyo 158-0082 (JP); KIUCHI Tomokazu, Tokyo 158-0082 (JP); YAMASHITA Masashi, Tokyo 158-0082 (JP); HARADA Takao, Tokyo 158-0082 (JP)
(74) Representative: Ter Meer Steinmeister & Partner
(86) International application number: PCT/JP2024/006703
(87) International publication number: WO 2024/219085

(57) **Abstract**

An electrically operated valve includes a valve main body having a valve chamber, a first flow passage hole communicating with the valve chamber, and a second flow passage hole communicating with the valve chamber, a valve body disposed to be movable forward and backward for a valve seat formed in an end part in the valve chamber side of the first flow passage hole, a rotor of an electric motor driving the valve body, and a transmission mechanism converting the rotation of the rotor into a linear motion to transmit to the valve body. The electrically operated valve includes a strainer having a meshed strainer main body part allowing the fluid to pass through, and a support part supporting the strainer main body part, and fixed to the valve main body such that the fluid passing through the first flow passage hole passes through the strainer main body part.

## Description

### TECHNICAL FIELD

The present invention relates to an electrically operated valve, and more particularly relates to an electrically operated valve provided with a strainer for capturing a foreign matter.

### BACKGROUND ART

An electrically operated valve controlling an opening degree of a valve with the use of an electric motor such as a stepping motor has been conventionally used in a refrigeration cycle apparatus which is provided with a refrigerant circuit such as an air conditioner and a refrigerating and freezing device.

Further, in the refrigeration cycle apparatus as mentioned above, a cartridge type electrically operated valve may be used. This can allow an electrically operated valve (a valve main body) to be assembled in the refrigeration cycle apparatus only by inserting the electrically operated valve like a cartridge into a valve mounting hole of a housing provided with an inflow passage and an outflow passage for the refrigerant.

According to the cartridge type valve, in a case where a manufacturer of the electrically operated valve provides a product to a manufacturer of refrigeration cycle apparatus as a customer, the electrically operated valve can be assembled in the refrigeration cycle apparatus to a finished product with a simple operation of only inserting the electrically operated valve into the housing, as long as various specifications such as an outer size of the valve main body, positions of respective flow passage holes and the like are previously shared with both the valve manufacturer and the customer, and the housing is previously produced in the customer side as a part of the refrigeration cycle apparatus. Therefore, the customer can efficiently manufacture the refrigeration cycle apparatus. Further, even in a case where the electrically operated valve is required to be exchanged at maintenance time, the exchanging work can be performed with the similar simple operation.

Further, the following patent literature 1 exists as a literature disclosing the electrically operated valve as mentioned above.

### CITATION LIST

### PATENT LITERATURE

Patent Literature 1: Japanese Unexamined Patent Application Publication No. 2018-173102

### SUMMARY OF INVENTION

In the meantime, in the electrically operated valve mentioned above, a strainer is desirably disposed in the flow passage because a metal piece such as a burr generated when manufacturing may mix into a fluid due to a long time use. The mixed foreign matter is caught between a valve body and a valve seat, for example, when closing the valve, and the valve body and the valve seat are damaged to cause a leakage from the valve.

Further, in a case where the strainer is provided, it is necessary to secure an opening area of the strainer (mesh) to a fixed level or more for not preventing the fluid communication. As a result, the magnitude of the strainer is necessarily equal to or more than a certain level. Accordingly, in particular, in a cartridge type electrically operated valve in which a valve main body is constructed compact in such a manner as to be inserted into a valve mounting hole of a housing, it is not easy to include the strainer in terms of mounting space, and there is a risk that the valve main body is enlarged.

Therefore, an object of the present invention is to prevent the leakage from the valve from being generated by removing the foreign matter in the fluid, and further to assemble the strainer in the cartridge type electrically operated valve without enlarging the valve main body.

In order to solve the problem mentioned and achieve the object, an electrically operated valve according to the present invention is an electrically operated valve provided with a valve main body which has a valve chamber in an inner part, has a first flow passage hole communicating with the valve chamber in a bottom part, and has a second flow passage hole communicating with the valve chamber, a valve body which is disposed in such a manner as to be movable forward and backward with respect to a valve seat formed in an end part in the valve chamber side of the first flow passage hole, a rotor which is a component of an electric motor driving the valve body, and a transmission mechanism which converts the rotation of the rotor into a linear motion to transmit to the valve body, wherein the electrically operated valve is further provided with a strainer having a meshed strainer main body part which allows the fluid to pass through, and a support part which supports the strainer main body part, and the support part is fixed to the valve main body such that the fluid passing through the first flow passage hole passes through the strainer main body part.

In the electrically operated valve according to the present invention, the strainer capturing the foreign matter in the fluid is disposed in the first flow passage hole side of the valve main body. Here, the strainer has the meshed strainer main body part and the support part for supporting the meshed strainer main body part. Further, the support part is fixed to the valve main body such that the fluid passing through the first flow passage hole passes through the strainer main body part. Typically, the support part is fixed to the bottom part of the valve main body in which the first flow passage hole is formed. Thus, it is possible to remove the foreign matter in the fluid and prevent the leakage from the valve from being generated. The above description "the support part is fixed to the valve main body" is not limited to a case where the support part is directly fixed to the valve main body, but means a concept including a state in which the support part is indirectly fixed, for example, via the other member.

Further, in the electrically operated valve according to the present invention, the support part may be fixed to an outer peripheral surface of the bottom part in such a manner as to be covered on the bottom part of the valve main body. This is for avoiding an enlargement of the electrically operated valve (the valve main body). More specifically, according to the fixing structure as mentioned above, a diameter of the strainer is enlarged (for example, in comparison with a case where the strainer is mounted to the inner part of the first flow passage hole), and a surface area of the strainer can be enlarged. Therefore, a height of the strainer can be lowered (a length in an axial direction, that is, a length along the flow passage can be shortened) at this degree, and it is possible to prevent the valve main body from being enlarged for assembling the strainer.

Further, the strainer fixing position (the support part) which does not directly relate to the capturing of the foreign matter can be released out of the flow passage by fixing the support part to the outer peripheral surface of the valve main body as mentioned above. As a result, it is possible to avoid occurrence of such a matter that the support part disturbs the flow of the fluid.

Further, an electrically operated valve according to an aspect of the present invention is an electrically operated valve mountable to a housing by being inserted into a valve mounting hole of the housing, the housing being provided with the valve mounting hole, a first flow passage which is open to a bottom surface of the valve mounting hole, and a second flow passage which is open to an inner peripheral surface of the valve mounting hole, wherein the second flow passage hole is open to an outer peripheral surface of the valve main body, and a first flow passage hole communicates with the first flow passage and the second flow passage hole communicates with the second flow passage when the valve main body is inserted into the valve mounting hole.

Further, in the electrically operated valve according to the above-described aspect, a strainer main body part may be provided in such a manner as to protrude out into an inflow passage of the housing when the valve main body is inserted into the valve mounting hole.

According to the present invention, it is possible to remove the foreign matter in the fluid to prevent the leakage from the valve from being generated, and it is further possible to assemble the strainer in the cartridge type electrically operated valve without enlarging the valve main body.

The other objects, features and advantages of the present invention are apparent from the following description of embodiments according to the present invention which is given on the basis of the accompanying drawings. Further, in each of the drawings, same reference numerals denote the same or corresponding portions.

### BRIEF DESCRIPTION OF DRAWINGS

Fig. 1 is a vertical cross sectional view showing an electrically operated valve (in a valve closed state) according to a first embodiment of the present invention.
Fig. 2 is a view showing the electrically operated valve (in a valve opened state) according to the first embodiment.
Fig. 3 is a vertical cross sectional view showing an electrically operated valve (in a valve closed state) according to a second embodiment of the present invention.

### DESCRIPTION OF EMBODIMENTS

### [First Embodiment]

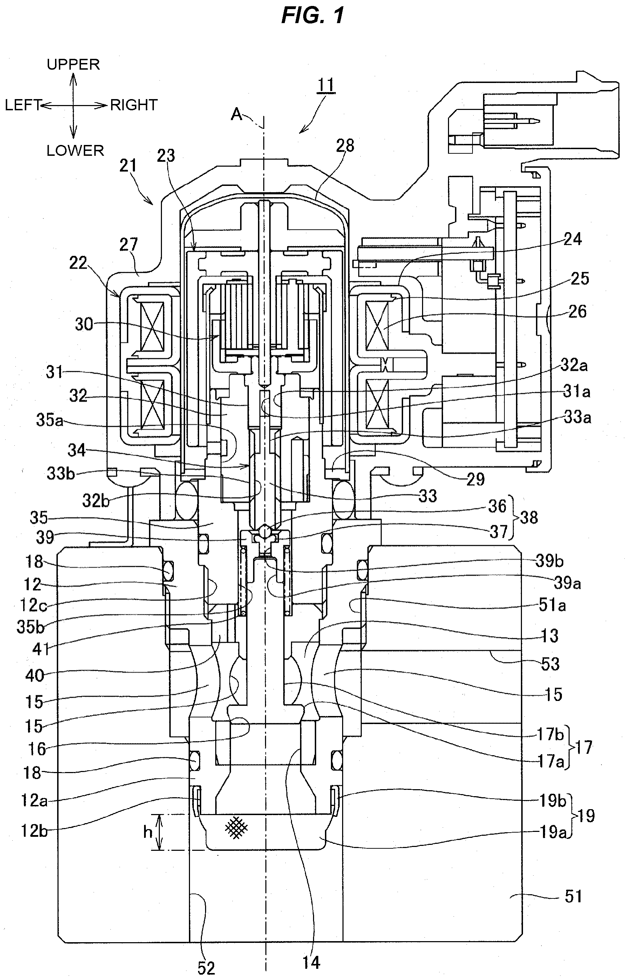

A description will be given of an electrically operated valve according to a first embodiment of the present invention with reference to Figs. 1 to 2. Each of the drawings appropriately shows two-dimensional coordinates which represent an up-and-down direction and a lateral direction and are orthogonal to each other, and the following description will be given on the basis of these directions. However, the electrically operated valve according to the present invention and the present embodiment (same applies to a second embodiment mentioned later) can be used in various directions, each of the directions are provided for convenience, and structures of respective parts of the present invention are not limited by these directions.

As shown in Figs. 1 to 2, an electrically operated valve 11 according to an embodiment of the present invention is a cartridge type electrically operated valve which can be assembled in a refrigeration cycle apparatus, for example, a heat pump type cooling and heating system by being screwed into a valve mounting hole 51a of a housing 51 provided in the refrigeration cycle apparatus.

Further, the electrically operated valve 11 is provided with a valve main body 12 which has a valve chamber 13 in an inner part, and an inflow hole 14 (corresponding to a first flow passage hole of the present invention) and an outflow hole 15 (corresponding to a second flow passage hole of the present invention) communicating with the valve chamber 13, a valve body 17 which is provided so as to be movable forward and backward (upward and downward) with respect to a valve seat 16 formed in a valve chamber side end part of the inflow hole 14, an electric motor 21 which drives the valve body 17, a speed reduction mechanism 30 which reduces the rotation of the electric motor 21, a transmission mechanism 34 which converts the rotation reduced by the speed reduction mechanism 30 into a linear motion to transmit to the valve body, a can 28 (a sealed container) which forms a sealed space in an upper part of the valve main body 12, a connection member 35 which connects the valve main body 12 and the can 28, and a strainer 19 which captures a foreign matter in a refrigerant.

The housing 51 has an inflow passage 52(corresponding to the first flow passage of the present invention) which allows the refrigerant to flow into, and an outflow passage 53 (corresponding to the second flow passage hole of the present invention) which allows the refrigerant to flow out. The inflow passage 52 extends vertically upward from a bottom surface of the housing 51 and is open to a bottom surface of the valve mounting hole 51a. The outflow passage 63 extends horizontally from a side surface of the housing 51 and is open to an inner peripheral surface of the valve mounting hole 51a.

On the contrary, the inflow hole 14 of the valve main body 12 passes through a bottom part (also called as "valve main body bottom part") corresponding to a lower end portion of the valve main body 12 vertically (in an up-and-down direction) and is open to a bottom surface of the valve main body 12. Further, the bottom part 12a is inserted into an upper end part of the inflow passage 52 of the housing 51 when the electrically operated valve 11 is mounted to the housing 51 (when the valve main body 12 is arranged within the valve mounting hole 51a). Further, a step part 12b for mounting a support part 19b of the strainer 19 mentioned later is formed in an outer peripheral surface of a lower end of the valve main body bottom part 12a.

On the other hand, the outflow hole 15 of the valve main body 12 is constructed by four through holes which horizontally pass through a peripheral wall of the valve main body 12 respectively in a left side surface, a right side surface, a front side surface and a rear side surface (a front-back direction is a direction which is orthogonal to a paper surface in Fig. 1). Further, seal materials 18 (O-rings ) are disposed in upper positions (outer peripheral surface of an upper part of the valve main body 12) and lower positions (outer peripheral surface of a valve main body bottom part 12a) of these four through holes 15 (outflow holes) in such a manner as to horizontally extend to surround the valve main body 12 and be interposed between an inner peripheral surface of the valve mounting hole 51a or the inflow passage 52 and the valve main body 12, and a ring-shaped flow passage space sandwiched by these seal materials 18 is configured to be formed between the housing 51 (an inner peripheral surface of the valve mounting hole 51a) and the valve main body 12 (an outer peripheral surface of the valve main body 12).

Therefore, when the electrically operated valve 11 is mounted to the housing 51 (the valve main body 12 is placed within the valve mounting hole 51a), the inflow hole 14 communicates with the inflow passage 52, and the outflow hole 15 communicates with the outflow passage 53 via the ring-shaped flow passage space. In order to fix the valve main body 12 to the housing 51, a female screw is formed on an inner peripheral surface of an upper part of the valve mounting hole 51a, and a male screw screwed into the female screw is formed on an outer peripheral surface of an upper part of the valve main body 12.

The strainer 19 is placed in the valve main body bottom part 12a. The strainer 19 has a mesh-shaped strainer main body part 19a which allows the refrigerant to pass through and can capture the foreign matter, and a ring-shaped support part 19b which supports the strainer main body part 19a, and the strainer main body part 19a has a deep dish-shaped (shallow cup-shaped) form having a flat bottom surface. Further, the strainer 19 is fixed to the valve main body bottom part 12a by putting the support part 19b over the step part 12b of the valve main body bottom part 12a, in other words, by fitting the support part 19b to an outer side (an outer peripheral surface) of the step part 12b of the valve main body bottom part 12a (conversely in other words, allowing the step part 12b of the valve main body bottom part 12a to be fitted to an inner side of the support part 19b).

The strainer 19 is formed as the fixing structure as mentioned above because of avoiding the enlargement of the valve main body 12 for the provision of the strainer 19. More specifically, according to the fixing structure as mentioned above, the diameter of the strainer 19 is enlarged. As a result, the surface area of the strainer main body part 19a can be enlarged. Therefore, it is possible to reduce the height dimension (the dimension in the up-and-down direction) h of the strainer main body part 19a, and it is possible to prevent necessity of newly setting a space for receiving the strainer 19 (for example, extending the bottom part 12a of the valve main body 12 downward to form a space for receiving the strainer 19) from being generated.

The electric motor 21 driving the valve body 17 is constructed by a stepping motor in the present embodiment. The stepping motor 21 is constructed by a stator 22 which is placed in an outer side (an outer periphery) of the cylindrical can 28 which is fixed to the connection member 35 so as to cover an upper surface of the connection member 35 and is covered and not bottomed (is opened in a bottom surface and is closed in a top surface), and a rotor 23 which is placed rotatably in an inner side (an inner periphery) of the can 28. The can 28 is joined to an outer peripheral surface of an upper end part of the connection member 35 via a ring-shaped base plate 29.

The stator 22 has a yoke 24, a coil 26 in which a winding wire is applied to a bobbin 25, and a resin molded cover 27 which covers the yoke 24 and the coil 26. In the meantime, a paradox planetary gear mechanism having a high speed reduction rate and being advantageous for downsizing is provided as the speed reduction mechanism 30 in an inner side of the rotor 23. The rotation of the rotor 23 is reduced by the speed reduction mechanism 30, and is transmitted to an output shaft 31 disposed in a center part of a lower surface of the rotor 23 to be output from the output shaft 31.

A tubular bearing member 32 is arranged in a lower part of the rotor 23, and the output shaft 31 is rotatably supported by the bearing member 32. The bearing member 32 is fixed to the connection member 35.

The connection member 35 is a member which connects the valve main body 12 and the can 28 for disposing the electric motor 21 in the upper surface part of the valve main body 12. However, the connection member 35 is screwed into a connection opening 12c which is formed in an upper surface of the valve main body 12 together with a lower spring receiving member 40 mentioned later, so that the connection opening 12c corresponding to an upper surface opening of the valve chamber 13 is closed.

Further, the connection member 35 is a tubular member having a large-diameter hole 35a and a small-diameter hole 35b which are mutually communicating through holes. The large-diameter hole 35a passes through a center part of an upper part of the connection member 35, and has a large diameter for allowing the bearing member 32 to fit and insert from the above. The small-diameter hole 35b passes through a center part of a lower part of the connection member 35 and has a small diameter. The bearing member 32 is fitted to and inserted into the large-diameter hole 35a in the upper part of the connection member and is fixed by caulking.

A fitting insertion hole 32a is formed in a center part of an upper surface of the bearing member 32, and the output shaft 31 is rotatably inserted into the fitting insertion hole 32a. In the meantime, a female screw part 32b is formed in a lower part of a center part of the bearing member 32, and a male screw part 33b formed on an outer peripheral surface of a screw drive member 33 is screwed into the female screw part 32b. The bearing member 32 (the female screw part 32b) and the screw drive member 33 (the male screw part 33b) form a feed screw mechanism 34, and construct the transmission mechanism 34 which converts the rotating motion supplied from the stepping motor 21 via the speed reduction mechanism 30 into the linear motion to the up-and-down direction to transmit to the valve body 17.

Here, the rotor 23 and the output shaft 31 performs a rotary motion at a fixed position in the up-and-down direction without moving up and down, and the rotary motion of the rotor 23 (the output shaft 31) is transmitted to the screw drive member 33 side by inserting a plate-like part 33a which is disposed in the upper end part of the screw drive member 33 and has a flat driver shape into a fitting groove 31a which is disposed in the lower end part of the output shaft 31 and has a slit shape. The plate-like part 33a disposed in the screw drive member 33 slides in the up-and-down direction within the fitting groove 31a of the output shaft 31. As a result, when the rotor 23 rotates, the screw drive member 33 linearly moves in the up-and-down direction by the feed screw mechanism 34 despite that the output gear 31 does not move in the up-and-down direction.

The linear motion of the screw drive member 33 is transmitted to the valve body 17 via a ball-like joint 38 which is constructed by a ball 36 and a ball receiving seat 37, and an upper spring receiving member 39. The valve body 17 is constructed by a valve body main body part 17a which comes into contact with and separates from the valve seat 16, and a stepped columnar valve body base part 17b which rises upward from a center part of an upper surface of the valve body main body part 17a. Further, the upper spring receiving member 39 and the valve body 17 (the valve body base part 17b) are connected by fitting and inserting the upper end part of the valve body base part 17b to a fitting hole 39a (a lower surface fitting hole) which is formed in a center part of a lower surface of the upper spring receiving member 39. Further, a fitting hole 39b (an upper surface fitting hole) is also provided in a center part of an upper surface of the upper spring receiving member 39, and the ball receiving seat 37 is fitted into the upper surface fitting hole 39b. Further the upper spring receiving member 39 is fitted to and inserted into the small-diameter hole 35 of the connection member 35 so as to be movable up and down.

Further, the lower spring receiving member 40 and the connection member 35 are fixed to the connection opening 12c of the valve main body 12 by being successively screwed. However, the valve body base part 17b is passed through a center part of the lower spring receiving member 40 fixed to the upper part of the valve chamber 13 so as to be slidable up and down, and a stepped through hole for placing a compression coil spring 41 is formed.

Further, the compression coil spring 41 is disposed between a step part in an upper part of the through hole and the upper spring receiving member 39. The compression coil spring 41 is configured to energize the valve body 17 to an upper side (a valve opening direction), and it is possible to more securely perform the valve opening motion by applying an energizing force of the coil spring 41 to the valve body 17 in addition to the drive force of the electric motor 21 when opening the valve.

Further, respective center axis lines A of the valve main body 12, the inflow hole 14, the valve seat 16, the valve body 17 and the ball-like joint 38 coincide with the center axis line (axis of rotation) A of the screw drive member 33, the output shaft 31 and the rotor 23, each other.

A description will be given of the motion of the electrically operated valve 11 according to the present embodiment as follows.

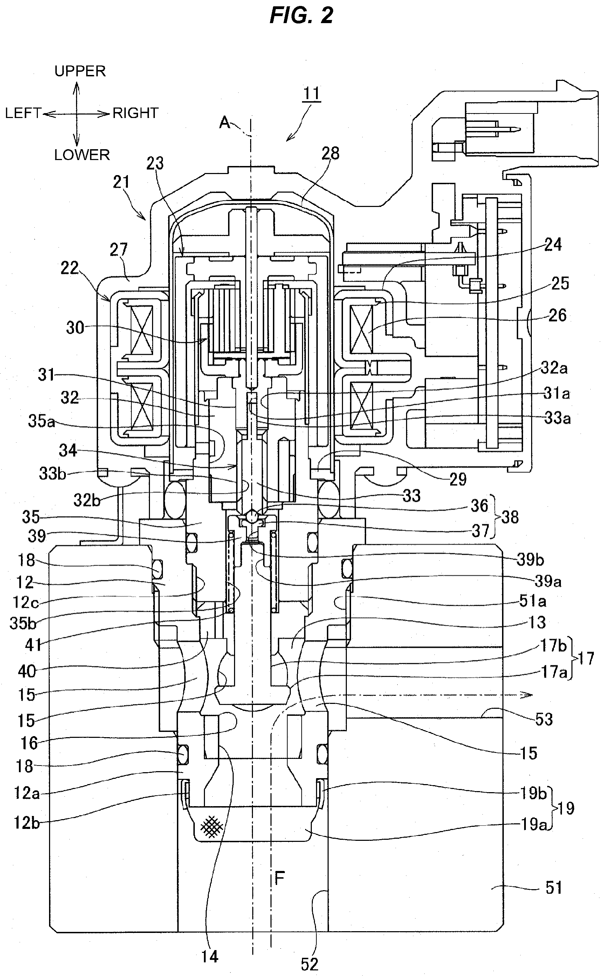

When an electric current is supplied to the stator 22 (the coil 26) in such a manner that the rotor 23 rotates in one direction from the valve closed state shown in Fig. 1, the rotation of the rotor 23 is converted into the linear motion by the feed screw mechanism 34 after being speed reduced by the speed reduction mechanism 30, and the screw drive member 33 is pulled upward. In association therewith, the upper spring receiving member 39 and the valve body 17 (the valve body base part 17b) pressed against the lower surface of the screw drive member 33 via the ball-like joint 38 are pulled upward by the energizing force of the compression coil spring 41, the valve body 17 (the valve body base part 17b) is separated from the valve seat 16, and the refrigerant flowing into from the inflow passage 52 and the inflow hole 14 flows out of the outflow passage 53 through the valve chamber 13 and the outflow hole 15 (refer to an arrow F in Fig. 2). The passing amount of the refrigerant (the refrigerant flow rate) in this valve opened state can be adjusted by the amount of rotation of the rotor 23 (the distance between the valve seat 16 and the valve body 17).

Further, in the valve opened state mentioned above, the foreign matter contained in the flowing refrigerant is captured by the strainer 19 which is disposed in the valve main body bottom part 12a, and it is possible to prevent the foreign matter from entering into the valve (the inflow hole 14 and the valve chamber 13). Further, the refrigerant flow is not disturbed since the support part 19b of the strainer 19 is arranged in the outer peripheral surface of the valve main body bottom part 12a (that is, outside the flow passage). Further, the strainer 19 is arranged in a portion near the valve seat 16, and bubbles contained in the refrigerant and flowing from the upstream side can be crushed by the strainer 19. Therefore, it is possible to prevent the large bubbles from being broken and generating any abnormal noise when passing between the valve seat 16 and the valve body 17. Thus, the electrically operated valve 11 can be made silent.

On the contrary, when the electric current is supplied to the stator 22 (the coil 26) in such a manner that the rotor 23 rotates in a reverse direction to the one direction from the valve opened state, the rotation of the rotor 23 is converted into the linear motion by the feed screw mechanism 34, and the screw drive member 33 moves downward. In association with this downward moving motion, the valve body 17 move downward. When the valve body 17 (the valve body main body part 17a) comes into contact with the valve seat 16, the flow passage between the inflow hole 14 and the outflow hole 15 is blocked, thereby forming the valve closed state (refer to Fig. 1).

Further, in the electrically operated valve 11 according to the present embodiment, the intrusion of the foreign matter into the valve is blocked by the strainer 19 as mentioned above. Therefore, it is possible to prevent the foreign matter from being caught between the valve body 17 and the valve seat 16 when performing the valve closing motion, and prevent the valve body 17 and the valve seat 16 from being damaged to generate the leakage from the valve.

### [Second Embodiment]

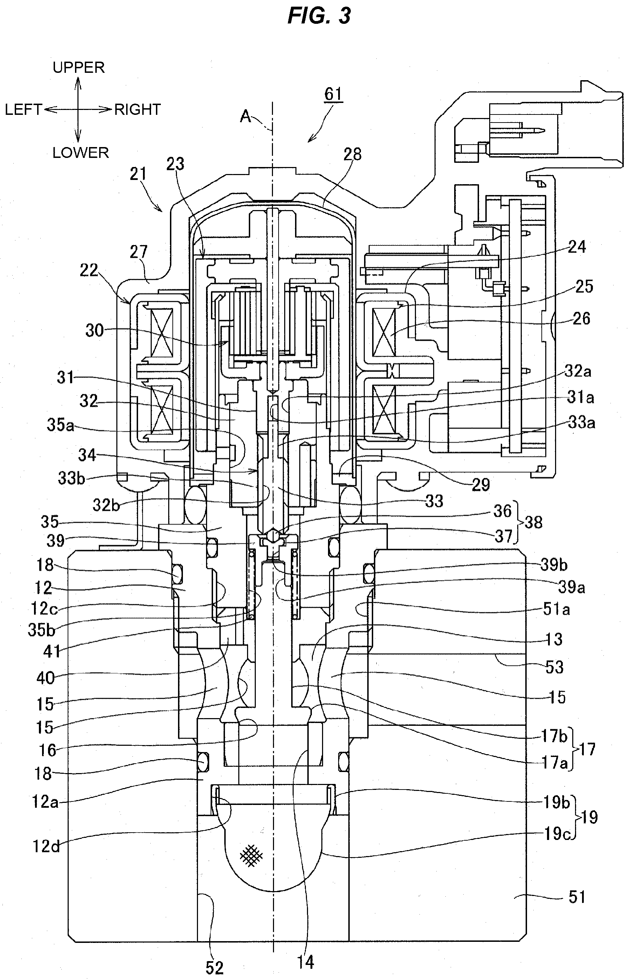

A description will be given of an electrically operated valve according to a second embodiment of the present invention with reference to Fig. 3.

As shown in Fig. 3, an electrically operated valve 61 according to the present embodiment is provided with the strainer 19 which has the mesh-shaped strainer main body part 19c and the ring-shaped support part 19b as in the first embodiment, however, the strainer main body part 19c has a downward protruding semi spherical shape as is different from the first embodiment.

Further, the strainer 19 is fixed to an inner side of the valve main body bottom part 12a. For this purpose, in place of formation of the step part 12b on the outer peripheral surface of the valve main body bottom part 12a as in the first embodiment, an expanded part 12d having an expanded inner diameter is formed in a lower end part of the inflow hole 14, and the strainer 19 is fixed to the valve main body bottom part 12a by fitting the support part 19b to the expanded part 12d.

The other portions than the shapes of the strainer 19 and the valve main body bottom part 12a mentioned above are the same as those of the electrically operated valve 11 according to the first embodiment. Therefore, duplicated description will be omitted by attaching the same reference numerals to the same or corresponding elements as or to those of the electrically operated valve 11 according to the first embodiment.

The description is given above of the embodiments according to the present invention. However, it is apparent for a person skilled in the art that the present invention is not limited to these embodiments, but can be variously changed within the scope of the invention described in claims.

For example, in each of the embodiments mentioned above, in the valve opened state, the refrigerant is configured to pass through the inflow passage (the first flow passage) 52 and the inflow hole (the first flow passage hole) 14 in this order to flow into the valve chamber 13, and pass through the outflow hole (the second flow passage hole) 15 to flow out of the outflow passage (the second flow passage) 53. However, the refrigerant may pass through the outflow passage (the second flow passage) 53 and the output hole (the second flow passage hole) 15 in this order to flow into the valve chamber 13, and pass through the inflow hole (the first flow passage hole) 14 to flow out of the inflow passage (the first flow passage) 52. In this case, it is desirable to fix the support part 19b to the valve main body 12 more firmly.

Further, the strainer (the strainer main body part) according to the present invention may be a plate-like strainer, that is, a strainer such as a perforated metal with fine holes drilled in a plate member. Further, in each of the embodiments mentioned above, the description is given of the electrically operated valve which converts the rotation of the rotor reduced by the speed reduction mechanism into the linear motion by the feed screw mechanism to transmit to the valve body. However, the present invention can be applied to a direct acting type electrically operated valve which is not provided with the speed reduction mechanism. The direct acting type electrically operated valve is an electrically operated valve which converts the rotation of the rotor into the linear motion by the feed screw mechanism without any speed reduction mechanism to transmit to the valve body, for example.

### REFERENCE SIGNS LIST

A center axis line
F flow of refrigerant
11, 61 electrically operated valve
12 valve main body
12a valve main body bottom part
12b step part
12c connection opening
12d expanded part
13 valve chamber
14 inflow hole (first flow passage hole)
15 outflow hole (through hole) (second flow passage hole)
16 valve seat
17 valve body
17a valve body main body part
17b valve body base part
18 seal material
19 strainer
19a, 19c strainer main body part
19b support part
21 electric motor (stepping motor)
22 stator
23 rotor
24 yoke
25 bobbin
26 coil
27 resin molded cover
28 can
29 base plate
30 speed reduction mechanism (paradox planetary gear mechanism)
31 output shaft
31a fitting groove
32 bearing member
32a fitting insertion hole
32b female screw part
33 screw drive member
33a plate-like part
33b male screw part
34 transmission mechanism (feed screw mechanism)
35 connection member
35a large-diameter hole
35b small-diameter hole
36 ball
37 ball receiving seat
38 ball-like joint
39 upper spring receiving member
39a fitting hole (lower surface fitting hole)
39b fitting hole (upper surface fitting hole)
40 lower spring receiving member
41 compression coil spring
51 housing
51a valve mounting hole
52 inflow passage (first flow passage)
53 outflow passage (second flow passage)

## Claims

1. An electrically operated valve comprising:
a valve main body which has a valve chamber in an inner part, has a first flow passage hole communicating with the valve chamber in a bottom part, and has a second flow passage hole communicating with the valve chamber;
a valve body which is disposed in such a manner as to be movable forward and backward with respect to a valve seat formed in an end part in the valve chamber side of the first flow passage hole;
a rotor which is a component of an electric motor driving the valve body; and
a transmission mechanism which converts the rotation of the rotor into a linear motion to transmit to the valve body,
wherein the electrically operated valve is further provided with a strainer having a meshed strainer main body part which allows the fluid to pass through, and a support part which supports the strainer main body part, and
wherein the support part is fixed to the valve main body such that the fluid passing through the first flow passage hole passes through the strainer main body part.

2. The electrically operated valve according to claim 1, wherein the support part is fixed to the bottom part of the valve main body in which the first flow passage hole is formed.

3. The electrically operated valve according to claim 2, wherein the support part is fixed to an outer peripheral surface of the bottom part in such a manner as to be covered on the bottom part of the valve main body.

4. The electrically operated valve according to any one of claims 1 to 3, wherein the electrically operated valve is mountable to a housing by being inserted into a valve mounting hole of the housing, the housing being provided with the valve mounting hole, a first flow passage which is open to a bottom surface of the valve mounting hole, and a second flow passage which is open to an inner peripheral surface of the valve mounting hole,
wherein the second flow passage hole is open to an outer peripheral surface of the valve main body, and
the first flow passage hole communicates with the first flow passage and the second flow passage hole communicates with the second flow passage when the valve main body is inserted into the valve mounting hole.

5. The electrically operated valve according to claim 4, wherein the strainer main body part is provided in such a manner as to protrude out into the first flow passage when the valve main body is inserted into the valve mounting hole.
